# FASCICULE DE BREVET EUROPEEN

(11) **EP 0 541 469 B1**
(45) Date de publication et mention de la délivrance du brevet: **06.03.1996**
(21) Numéro de dépôt: 92440123.5
(22) Date de dépôt: 05.11.1992
(51) Int. Cl.: F16L 33/22, F16L 33/24

(54) **Raccords pour tubes en matière synthétique et procédé de montage de tels raccords**
Kupplung für Kunststoffrohre und sein Montageverfahren
Coupling for plastic tubes and its mounting method

(30) Priorité: 07.11.1991 FR 9114025
(43) Date de publication de la demande: 12.05.1993
(73) Titulaire: SOCIETE D'EXPLOITATION DES ETABLISSEMENTS HENRI HAAS, S.A., F-68200 Mulhouse (FR)
(72) Inventeur: Schultz, Jean-Jacques, F-68100 Mulhouse (FR); Grabner, Gérard, F-90000 Belfort (FR)
(74) Mandataire: Nuss, Pierre

(56) Documents cités:
- DE-U- 8 813 089
- GB-A- 1 185 220

## Description

La présente invention concerne le domaine de la distribution des fluides, en particulier pour le chauffage à eau chaude et pour le sanitaire et a pour objet des raccords pour tubes en matière synthétique.

L'invention a également pour objet un procédé de montage de tels raccords.

Les tubes généralement utilisés sont des tubes semi-rigides en matière synthétique, telle que le polyéthylène réticulé, le polybutène ou d'autres matières synthétiques présentant des caractéristiques équivalentes.

Ces tubes sont principalement utilisés dans les installations sanitaires pour la distribution de l'eau chaude et de l'eau froide, dans les installations de chauffage à eau chaude pour l'alimentation des radiateurs ou pour la distribution de la chaleur par rayonnement dans les dalles, dans le cas du chauffage par le sol.

Les différentes utilisations précitées nécessitent le raccordement des extrémités des tubes en matière synthétique, soit à un autre tube en matière synthétique ou autre, soit à des appareils ou accessoires sanitaires ou de chauffage, tels que des connecteurs ou des distributeurs, des vannes, des robinets, des compteurs, des radiateurs, etc..., qui sont munis d'embouts de raccordement mâles ou femelles pourvus d'un filetage ou d'un taraudage.

Lors du raccordement du tube, ce dernier est généralement déjà installé dans des colonnes et gaines techniques, dans les vides sanitaires et faux plafonds, dans les doublages de cloison, dans les plinthes de pièces ou à même le sol avant coulage du béton.

En outre, les appareils et accessoires sanitaires ou de chauffage, auxquels le tube doit être raccordé, sont très souvent également fixés de manière définitive.

Il en résulte la nécessité de réaliser la liaison de deux éléments fixes, ce qui entraîne que l'opération de connexion ne peut être effectuée que par l'intermédiaire du raccord même, cette opération devant, si possible, être réalisée sans utilisation d'une pièce ou d'un raccord supplémentaire qui augmenterait le coût du raccordement.

Le raccordement entre un tube et un appareil sanitaire ou de chauffage doit préférentiellement être démontable afin de permettre des opérations ultérieures de maintenance ou de réparation de l'appareil.

Actuellement, le montage d'un raccord en bout de tube est généralement réalisé sur chantier et en des endroits peu accessibles ou exigus, de sorte qu'il est souhaitable que cette opération soit simple et puisse être mise en oeuvre avec des outils simples, facilement transportables, peu encombrants et ergonomiques.

On connaît actuellement des raccords pour tubes en matière synthétique, notamment des raccords dits "à sertir" nécessitant l'emploi d'outils spéciaux en vue de leur montage en bout de tube.

Les éléments d'un premier raccord de ce type permettant la liaison avec le tube consistent en une bague de diamètre intérieur égal ou légèrement supérieur au diamètre extérieur maximal du tube et en un insert cylindrique présentant un profil annelé, dont le diamètre extérieur est supérieur au diamètre intérieur du tube. L'opération de montage de ce raccord consiste alors à enfiler la bague sur le tube, puis à évaser l'extrémité du tube au moyen d'un outil spécial, l'insert étant enfilé ensuite dans l'extrémité ainsi évasée et à comprimer le tube sur le profil annelé de l'insert en ramenant la bague au droit de cet insert, au moyen d'un deuxième outil spécial.

L'extrémité de l'insert, opposée au profil annelé, permet le raccordement à un autre tube ou à un appareil sanitaire ou de chauffage et présente, dans le cas d'un raccordement à un autre tube, un profil annelé, tandis que dans le cas d'un raccordement à un appareil, elle est filetée ou taraudée ou constituée par un collet maintenant un écrou prisonnier femelle rotatif. Un tel écrou prisonnier est le seul moyen de raccordement direct et démontable pour un tel type de raccord.

Ce raccord présente l'inconvénient de nécessiter l'utilisation de deux outils spéciaux, d'entraîner un risque de détérioration du tube lors de l'opération d'évasement, en fonction de l'outil utilisé et de l'habileté de l'opérateur, par dépassement de la limite élastique de la matière constituant le tube et d'entraîner, suite à l'opération d'évasement et d'introduction de l'insert dans le tube, un risque d'accumulation d'un excédent de matière du tube, sous forme d'un bourrelet, devant la bague, stoppant ainsi l'avance de la bague et, au cas où le raccord comporte un écrou prisonnier, un risque de blocage de la rotation de ce dernier. En outre, ce type de raccord ne permet pas un raccordement direct et démontable à un appareil muni d'un embout de raccordement femelle.

Un autre type connu de raccord dit "à sertir", nécessitant également l'utilisation d'un outil spécial pour son montage en bout de tube, présente des éléments permettant la liaison au tube constitués par une bague de faible épaisseur, dont le diamètre intérieur est égal ou légèrement supérieur au diamètre extérieur maximal du tube, et par un insert, dont une extrémité est formée par plusieurs cannelures et dont le diamètre est inférieur au diamètre intérieur du tube.

Pour ce type de raccord, l'opération de montage s'effectue par enfilage de la bague sur l'extrémité du tube, par introduction des cannelures de l'insert dans le tube, puis par écrasement de la bague au moyen d'un outil spécial, afin que le tube épouse les cannelures de l'insert.

Le raccordement du tube à un appareil sanitaire ou de chauffage est réalisé par l'autre extrémité de l'insert, gui est munie à cet effet, soit d'un filetage ou d'un taraudage, soit d'un collet de maintien d'un écrou prisonnier rotatif femelle.

Cet écrou est le seul moyen de raccordement direct et démontable. Un tel raccord nécessite également l'utilisation d'un outil spécial et ne permet pas un raccordement direct et démontable à un appareil muni d'un embout de raccordement femelle.

Un autre type de raccord connu, dit "à compression", ne nécessite pas, contrairement aux raccords précités, d'outil spécial pour son montage en bout de tube. Un tel raccord est constitué par un corps de forme générale cylindrique, dont une extrémité est taraudée ou filetée et est munie, extérieurement au taraudage ou dans le prolongement du filetage, d'un six pans, ledit corps étant vissé à l'embout de raccordement de l'équipement sanitaire ou de chauffage. L'autre extrémité de ce raccord est constituée par une tubulure annelée, sur laquelle est engagé le tube gui est serré sur ladite tubulure au moyen d'un écrou de compression, muni d'une butée conique interne, gui emprisonne et comprime une bague biconique fendue, dont la face intérieure présente un profil annelé, ledit écrou et la bague étant engagés préalablement sur le tube.

Par vissage de l'écrou sur un filetage solidaire du corps, la bague est comprimée entre la butée interne dudit écrou et une butée conique solidaire du corps du raccord et, sous l'effort de serrage, la bague fendue se resserre et comprime le tube dans les profils annelés de ladite bague et de la tubulure.

On connaît également une variante de réalisation de ce dernier type de raccord, dans laquelle les éléments de vissage de l'écrou et de raccordement à un appareil sont dissociés du corps. Dans un tel cas, l'appareil sanitaire ou de chauffage devient spécifique, du fait que son embout de raccordement comprend un filetage extérieur pour le serrage de l'écrou et un évidement cylindrique ou conique dans lequel est introduite l'extrémité du corps, qui présente alors une forme cylindrique ou conique.

De plus, ce type de raccords n'est utilisable qu'avec un appareil sanitaire ou de chauffage pourvu d'un embout de raccordement spécifique, un raccordement à un autre appareil entraînant la nécessité d'utiliser un raccord spécial pour l'adaptation de l'appareil au type de raccord, ce qui augmente le coût du raccordement en conséquence.

Ces raccords connus présentent une surface de serrage du tube très faible correspondant à la surface de la bague, dont la largeur est petite afin de limiter la longueur de l'écrou.

En outre, la détermination d'un serrage suffisant est très difficile, un serrage trop faible de l'écrou ne permettant pas un ancrage suffisant du tube dans les profils annelés de la tubulure et de la bague, de sorte que la résistance à la traction est faible et un serrage trop fort écrasant ledit tube et le blessant.

On connaît également, par DE-U-8 813 089, un raccord de tuyau à haute pression présentant une douille, filetée intérieurement, coopérant avec un mandrin fileté, dont l'extrémité pénètre dans le tuyau qui est serré sur cette dernière par vissage de la douille. Au cours de ce serrage, des nervures de la douille s'enfoncent progressivement partiellement dans l'épaisseur de paroi du tuyau et participent ainsi à son serrage et à son maintien.

Avec ce raccord, l'extrémité du tuyau est d'abord enfilée dans la douille, puis le mandrin est inséré dans l'extrémité du tuyau et, lors du vissage de la douille sur sa partie filetée, son extrémité conique réalise le serrage progressif de l'extrémité du tuyau en coopération avec les nervures.

Il en résulte un risque d'expulsion de l'extrémité du tuyau lors du serrage, suite à la poussée exercée par le mandrin, aucune pièce de retenue du tuyau au début de ce serrage n'étant prévue.

La présente invention a pour but de pallier ces inconvénients.

Elle a, en effet, pour objet un ensemble comprenant un raccord et un tube en matière synthétique, constitué par un moyen de maintien de l'extrémité du tube coopérant, par l'intermédiaire d'un moyen de blocage, avec un moyen de sertissage de ladite extrémité et de raccordement à un appareil ou à un autre raccord, ledit moyen de blocage pénétrant dans l'extrémité du tube et s'appuyant sur le moyen de sertissage et de raccordement, caractérisé en ce que le moyen de maintien de l'extrémité du tube est constitué sous forme d'une bague, entourant ladite extrémité du tube, présentant un alésage de diamètre égal ou légèrement supérieur au diamètre extérieur maximal dudit tube et pourvue, à sa partie coopérant avec ladite extrémité, d'un taraudage se vissant sur cette dernière.

L'invention a également pour objet un procédé de montage d'un tel ensemble comprenant un raccord et un tube en matière synthétique, constitué par un moyen de maintien de l'extrémité du tube coopérant, par l'intermédiaire d'un moyen de blocage, avec un moyen de sertissage de ladite extrémité et de raccordement à un appareil ou à un autre raccord, caractérisé en ce qu'il consiste à enfiler le moyen de maintien de l'extrémité d'un tube sur ledit tube, à solidariser ce moyen avec ladite extrémité par vissage du taraudage jusqu'à affleurement de l'extrémité du tube avec celle du moyen, à monter sur l'extrémité du moyen de sertissage et de raccordement le moyen de blocage, à immobiliser ce dernier en position, à emboîter ledit moyen de sertissage et de raccordement, ensemble avec le moyen de blocage, sur l'extrémité de l'ensemble moyen de maintien et tube, puis à engager à force le moyen de blocage dans l'extrémité de l'ensemble formé par le moyen de maintien et par l'extrémité du tube, par pénétration forcée du moyen de maintien avec le tube dans le moyen de sertissage et de raccordement.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation latérale et en coupe d'un raccord femelle conforme à l'invention ;
la figure 2 est une vue analogue à celle de la figure 1 d'un raccord mâle, et
les figures 3 à 11 sont des vues partielles en élévation latérale et en coupe représentant les diverses phases du procédé de montage d'un raccord conforme à l'invention.

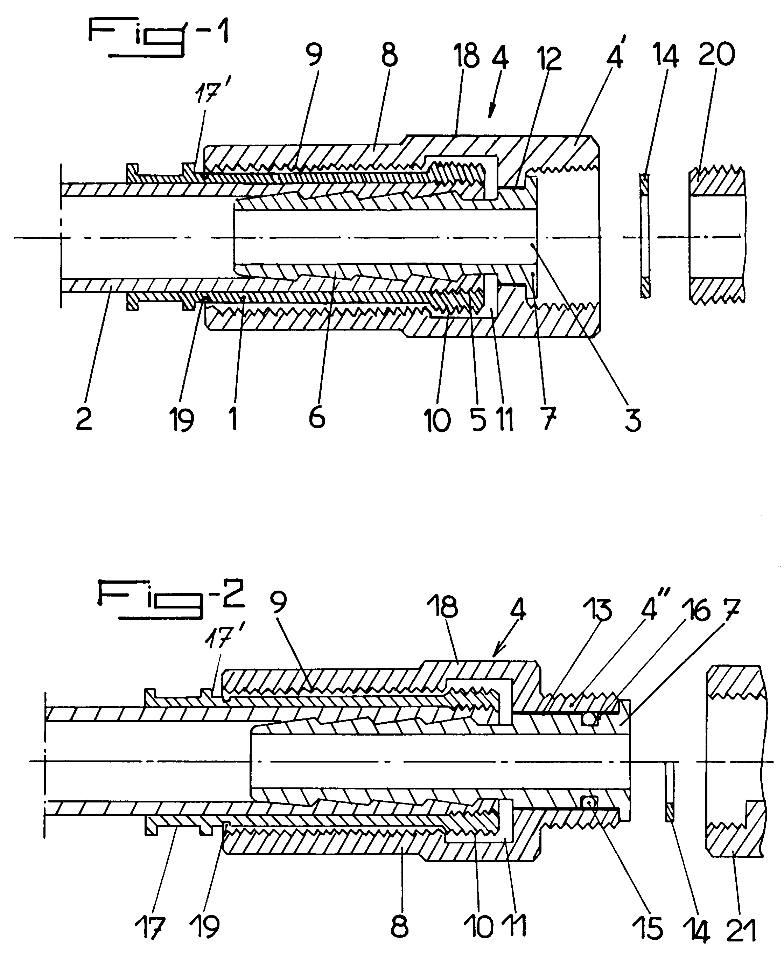

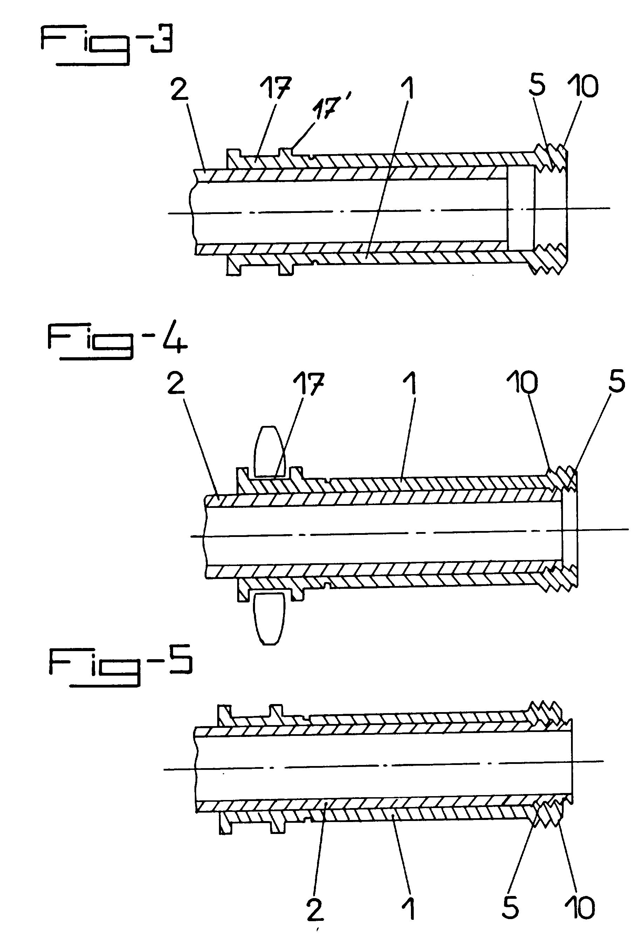

Conformément à l'invention, et comme le montrent plus particulièrement, à titre d'exemple, les figures 1 et 2 des dessins annexés, l'ensemble, comprenant un raccord et un tube en matière synthétique et constitué par un moyen 1 de maintien de l'extrémité du tube 2 coopérant, par l'intermédiaire d'un moyen de blocage 3, avec un moyen 4 de sertissage de ladite extrémité et de raccordement à un appareil ou à un autre raccord, ledit moyen de blocage 3 pénétrant dans l'extrémité du tube 2 et s'appuyant sur le moyen 4 de sertissage et de raccordement, est caractérisé en ce que le moyen 1 de maintien de l'extrémité du tube 2 est constitué sous forme d'une bague, entourant ladite extrémité du tube 2, présentant un alésage de diamètre égal ou légèrement supérieur au diamètre extérieur maximal dudit tube 2 et pourvue, à sa partie coopérant avec ladite extrémité, d'un taraudage 5 se vissant sur cette dernière.

Le moyen 1 est destiné à tenir le tube 2, par l'intermédiaire du taraudage 5, pendant la pénétration des cannelures 6 du moyen 3 et son alésage fait office de barrière lors de la compression du tube 2 sous l'action desdites cannelures 6.

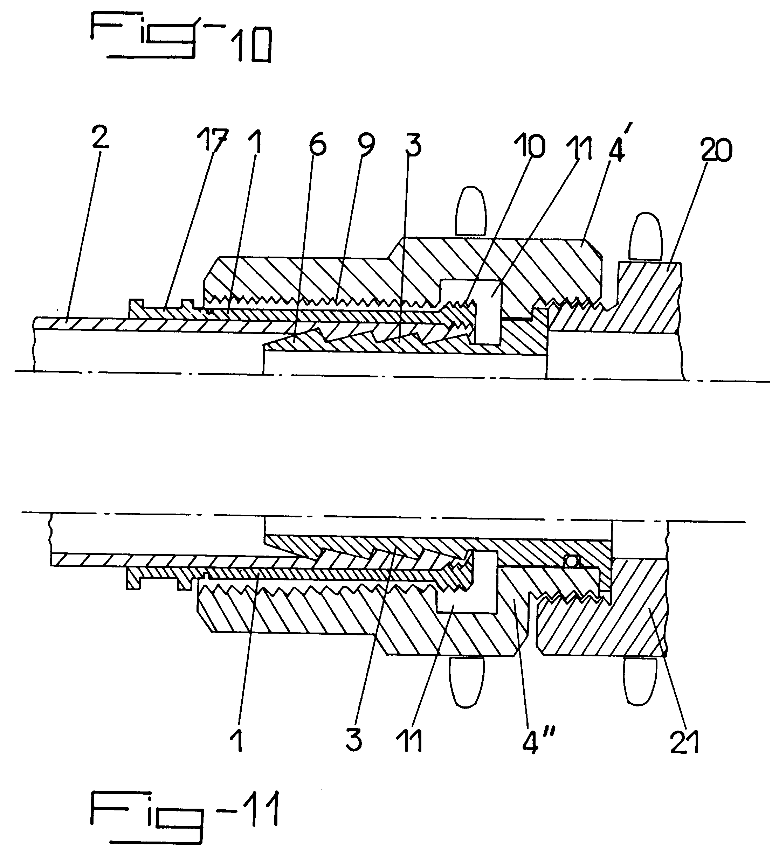

Le moyen de blocage 3 est constitué par une douille cannelée présentant une partie munie de cannelures 6 de diamètre extérieur supérieur au diamètre intérieur du tube 2, destinée à pénétrer dans ledit tube 2 et à coopérer avec l'intérieur de ce dernier, et une partie 7 d'appui sur le moyen 4 de sertissage et de raccordement, cette partie 7 étant avantageusement sous forme d'un épaulement (figures 1, 2 et 6 à 11).

Le moyen 4 de sertissage et de raccordement à un appareil ou à un autre raccord (figures 1 et 2) est constitué sous forme d'un embout rotatif femelle 4' ou mâle 4" pourvu d'un polygone de manoeuvre 18 et muni, d'une part, à son extrémité coopérant avec le moyen 1, d'une partie en forme de manchon 8 présentant un taraudage 9 destiné à coopérer avec un filetage 10 de l'extrémité du moyen 1 vissée sur le tube 2, ledit taraudage 9 se terminant au fond du manchon en un chambrage 11 d'une longueur supérieure au filetage 10 du moyen 1 et, d'autre part, à son extrémité opposée, soit d'un épaulement intérieur 12 d'appui de l'épaulement formant la partie 7 du moyen 3 (figure 1), soit d'un trou lisse 13 de passage du moyen 3, dont la partie 7 s'appuie sur ladite extrémité opposée (figure 2).

Du côté opposé au filetage 10, le moyen 1 est pourvu, à une distance du filetage 10 supérieure à la longueur du taraudage 9 du manchon 8 du moyen 4, d'un dispositif 17 de manoeuvre, tel que des méplats ou un polygone de manoeuvre, ce dispositif 17 étant délimité, du côté tourné vers le filetage 10, par une butée 17′ (figures 1 à 5 et 8 à 11).

Dans le cas d'utilisation d'un embout rotatif femelle 4′ (figure 1), l'étanchéité du raccordement avec une partie mâle d'un appareil ou d'un raccord est assurée, au niveau de l'épaulement intérieur 12, au moyen d'un joint à écrasement 14.

Dans le cas d'utilisation d'un embout rotatif mâle 4˝ (figure 2), l'étanchéité est assurée, d'une part, entre les moyens 3 et 4 par l'intermédiaire d'un joint torique 15 logé dans une gorge 16 prévue sous la partie 7 du moyen 3 et s'appuyant contre la paroi du trou lisse 13 et, d'autre part, soit au moyen d'un joint à écrasement 14 serré dans un organe femelle avec épaulement par la partie 7 formant appui lors du serrage du raccord, soit par prévision d'une bande d'étanchéité entre les filets de l'organe mâle et d'un organe femelle ne présentant pas d'épaulement. Dans ce dernier cas, l'étanchéité du raccord est assurée par le joint torique 15.

Le montage de tels raccords s'effectue en enfilant l'alésage du moyen 1 de maintien de l'extrémité du tube 2 sur ledit tube 2 (figure 3), puis en solidarisant ce moyen 1 avec ladite extrémité en faisant affleurer les extrémités correspondantes, par vissage du moyen 1 sur ladite extrémité par l'intermédiaire de son taraudage 5, ce vissage étant effectué au moyen d'une clé plate standard ou autre coopérant avec le dispositif de manoeuvre 17, jusqu'à affleurement ou éventuellement en laissant subsister un léger dépassement du tube au-delà de l'extrémité du moyen 1. En cas d'un dépassement trop important, le surplus de tube doit être coupé au moyen d'un couteau (figures 3 à 5).

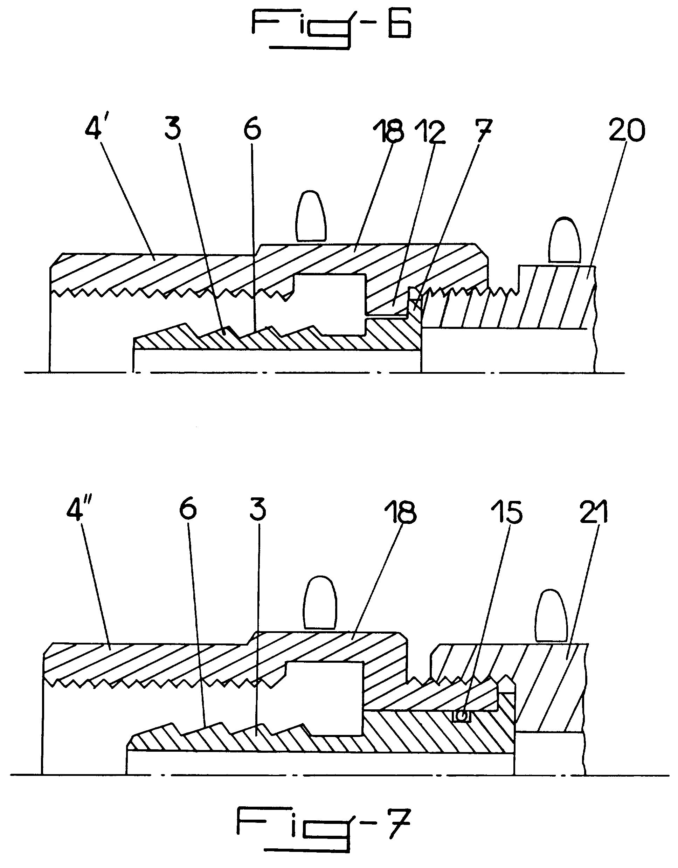

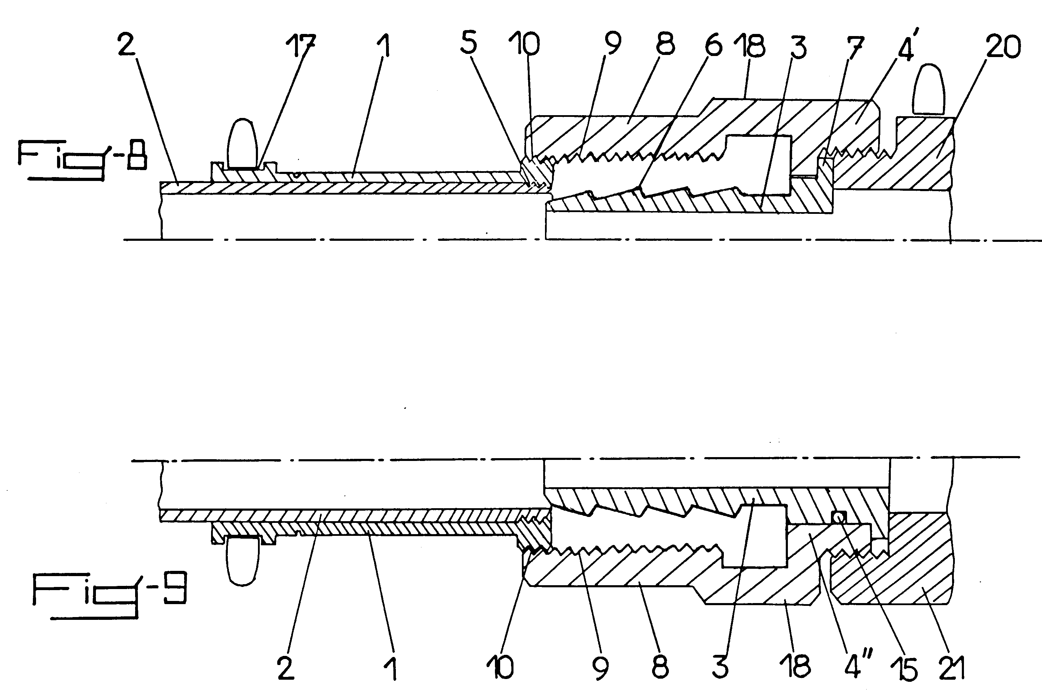

Le moyen de blocage 3 est alors monté sur l'extrémité du moyen de sertissage et de raccordement 4, puis immobilisé en position au moyen d'un embout fileté 20 ou taraudé 21 d'un accessoire quelconque (figures 6 et 7). L'ensemble ainsi réalisé est emboîté ensuite sur l'extrémité de l'ensemble moyen de maintien 1 et tube 2 par le manchon 8 du moyen 4, puis le moyen de blocage 3 est engagé à force dans l'extrémité de l'ensemble formé par le moyen de maintien 1 et par l'extrémité du tube 2, par pénétration forcée du moyen de maintien 1 avec le tube 2 dans le moyen de sertissage et de raccordement 4 (figures 8 à 11).

Dans le cas d'un raccord mâle, il convient de vérifier, préalablement à la mise en place du moyen de blocage 3, que ce dernier est pourvu d'un joint torique 15 destiné à coopérer avec le trou lisse 13 de passage du moyen 4 correspondant.

Le montage préalable du moyen de blocage 3 permet d'assurer un placage effectif de la partie 7 du moyen 3 contre l'épaulement interne 12 ou contre la face externe du moyen 4 (figures 6 et 7). La pénétration par vissage du moyen 1 dans le moyen 4 est avantageusement réalisée au moyen de deux clés plates standard ou autres, l'une engagée sur le dispositif 17 et l'autre sur le polygone de manoeuvre de l'accessoire de serrage du moyen 3 (figure 8), le moyen 4, ensemble avec le moyen 3 et l'accessoire de serrage de ce dernier, étant vissés sur le moyen 1 avec le tube 2.

Ce vissage prend fin lorsque le filetage 10 de l'extrémité du moyen 1 n'est plus en prise avec le taraudage correspondant 9 du moyen 4 et est entièrement dans le chambrage 11 prévu à l'extrémité intérieure du manchon 8 (figures 1, 2, 10 et 11).

Selon une caractéristique de l'invention, le moyen 1 est avantageusement pourvu, près de son dispositif de manoeuvre 17, à une distance du filetage 10 légèrement inférieure à la longueur du taraudage 9 du manchon 8 du moyen 4, d'un repère circulaire 19. Ce repère circulaire 19 est escamoté à l'intérieur du manchon 8 dès que la fin du vissage du moyen 4 sur le moyen 1 est réalisée. Ce moment peut également être constaté par une diminution de l'effort de vissage.

L'accessoire utilisé pour le montage des différents éléments du raccord peut alors être dévissé et enlevé au moyen de deux clés de manoeuvre engagées sur le polygone 18 et sur le moyen de manoeuvre de l'accessoire 20 ou 21, l'embout rotatif femelle 4′ ou mâle 4˝ est alors libre en rotation tout en étant solidarisé axialement avec le tube 2.

Le procédé de montage susvisé permet une pénétration en force des cannelures 6 du moyen 3 à l'intérieur du tube 2 et ces cannelures 6, présentant une forme en dards orientés vers le tube avec des crêtes et des creux arrondis, permettent de réduire l'effort de pénétration, tout en évitant une déformation préjudiciable de la face intérieure du tube 2.

Sous l'effort d'introduction des cannelures 6, la matière du tube 2 flue et remplit complètement le volume délimité entre la surface intérieure de l'alésage du moyen 1 et la surface des cannelures 6, assurant ainsi à la fois la résistance à la traction et l'étanchéité de la liaison du raccord en bout du tube. Cette liaison est indémontable du fait que les cannelures rendent le moyen 3 prisonnier et, par conséquent, la partie 7 empêche, par l'intermédiaire de son contact avec l'épaulement intérieur 12 ou contre l'extrémité du trou lisse 13, le taraudage 9 du manchon 8 du moyen 4 de coopérer à nouveau avec le filetage 10 du moyen 1 et donc une sortie de la douille formant le moyen 3 hors du tube 2.

L'embout rotatif 4′ ou 4˝ formé par le moyen 4 permet, conformément à l'invention, un raccordement direct et démontable d'un tube 2 à un embout mâle ou femelle correspondant d'un appareil ou accessoire d'une installation sanitaire ou de chauffage.

Cet embout, gui a servi à l'introduction du moyen 3 sous forme de douille cannelée, est prisonnier dans le sens axial entre la partie 7 du moyen 3 et la butée 17′ du dispositif 17 du moyen 1, mais peut tourner librement, grâce au trou de passage de son épaulement intérieur 12 ou à son trou lisse 13, autour du moyen 1.

Cette liberté de rotation est, par ailleurs, assurée du fait que le filetage 10 du moyen 1 ne peut plus entrer en contact avec le taraudage 9 du manchon 8 du moyen 4.

La libre rotation de l'embout 4′ ou 4˝ permet son vissage ou son dévissage sur un embout fileté 20 ou taraudé 21 (figures 1 et 2) au moyen de clés usuelles, sans entraînement en rotation du moyen 1 et du tube 2, ledit embout rotatif 4′ ou 4˝ tournant pendant son vissage et avançant sur ou dans l'embout correspondant 20 ou 21 et entraînant dans le même déplacement axial le moyen 1 et le tube 2 par appui sur la partie 7 du moyen 1.

Pendant son dévissage, l'embout rotatif 4′ ou 4˝ est libéré de l'embout correspondant 20 ou 21 et entraîne dans le même déplacement axial le moyen 1 et le tube 2 par appui sur la butée 17′ du dispositif de manoeuvre 17 du moyen 1.

Le raccordement obtenu est direct, ne nécessitant pas de raccord intermédiaire, seul un joint à écrasement 14 étant inséré entre la partie 7 maintenue dans ou sur l'embout 4′ ou 4˝ et l'embout fileté 20 ou taraudé 21 afin d'assurer l'étanchéité dudit raccordement.

Si l'embout taraudé 21 ne présente pas d'épaulement formant butée pour l'embout rotatif mâle 4˝ correspondant, il n'est pas possible d'utiliser un joint à écrasement 14. Il est alors nécessaire, pour assurer l'étanchéité du raccordement, de prévoir, de manière connue, une étanchéification des filets au moyen d'une bande en matière synthétique, d'une pâte ou d'un liquide, suivant la pratique courante dans ce domaine, avant l'introduction et le vissage. Le raccord mâle 4˝ doit présenter son propre système d'étanchéité entre les moyens 3 et 4, cette étanchéité étant assurée par l'intermédiaire du joint torique 15 logé dans la gorge 16 prévue à cet effet sous la partie 7 du moyen 3 et s'appuyant contre la paroi du trou lisse 13 du moyen 4. Ce joint torique 15 assure l'étanchéité tout en autorisant une libre rotation du moyen 4.

Grâce à l'invention, il est possible de réaliser des raccords pour tubes en matière synthétique, dont la liaison aux tubes peut être effectuée avec une maîtrise parfaite du serrage, en utilisant le principe du sertissage, qui est opéré sans nécessiter l'utilisation d'un outillage spécifique et peu ergonomique, mais simplement des clés plates standard et un accessoire quelconque de pièce sanitaire, de plomberie ou de mécanique, présentant les dimensions requises et d'utilisation courante sur les chantiers.

En outre, les raccords conformes à l'invention permettent un raccordement direct d'un tube à un appareil sanitaire ou de chauffage, sans nécessiter la mise en oeuvre d'un raccord intermédiaire et quel que soit l'embout, mâle ou femelle, de cet appareil.

Enfin, le raccordement réalisé reste toujours démontable.

## Revendications

1. Ensemble comprenant un raccord et un tube en matière synthétique, constitué par un moyen (1) de maintien de l'extrémité du tube (2) coopérant, par l'intermédiaire d'un moyen de blocage (3), avec un moyen (4) de sertissage de ladite extrémité et de raccordement à un appareil ou à un autre raccord, ledit moyen de blocage (3) pénétrant dans l'extrémité du tube (2) et s'appuyant sur le moyen (4) de sertissage et de raccordement, caractérisé en ce que le moyen (1) de maintien de l'extrémité du tube (2) est constitué sous forme d'une bague, entourant ladite extrémité du tube (2), présentant un alésage de diamètre égal ou légèrement supérieur au diamètre extérieur maximal dudit tube (2) et pourvue, à sa partie coopérant avec ladite extrémité, d'un taraudage (5) se vissant sur cette dernière.

2. Ensemble, suivant la revendication 1, caractérisé en ce que le moyen de blocage (3) est constitué par une douille cannelée présentant une partie munie de cannelures (6) de diamètre extérieur supérieur au diamètre intérieur du tube (2), destinée à pénétrer dans ledit tube (2) et à coopérer avec l'intérieur de ce dernier, et une partie (7) d'appui sur le moyen (4) de sertissage et de raccordement, cette partie (7) étant sous forme d'un épaulement.

3. Ensemble, suivant l'une quelconque des revendications 1 et 2, caractérisé en ce que le moyen (4) de sertissage et de raccordement à un appareil ou à un autre raccord est constitué sous forme d'un embout rotatif femelle (4') ou mâle (4") pourvu d'un polygone de manoeuvre (18) et muni, d'une part, à son extrémité coopérant avec le moyen (1) de maintien, d'une partie en forme de manchon (8) présentant un taraudage (9) destiné à coopérer avec un filetage (10) de l'extrémité du moyen (1) de maintien vissée sur le tube (2), ledit taraudage (9) se terminant au fond du manchon en un chambrage (11) d'une longueur supérieure au filetage (10) du moyen (1) de maintien et, d'autre part, à son extrémité opposée, soit d'un épaulement intérieur (12) d'appui de l'épaulement formant la partie (7) du moyen de blocage (3), soit d'un trou lisse (13) de passage du moyen de blocage (3), dont la partie (7) s'appuie sur ladite extrémité opposée.

4. Ensemble, suivant l'une quelconque des revendications 1 et 3, caractérisé en ce que du côté opposé au filetage (10), le moyen (1) de maintien est pourvu, à une distance du filetage (10) supérieure à la longueur du taraudage (9) du manchon (8) du moyen de sertissage (4), d'un dispositif (17) de manoeuvre, tel que des méplats ou un polygone de manoeuvre, ce dispositif (17) étant délimité, du côté tourné vers le filetage (10), par une butée (17').

5. Ensemble, suivant la revendication 3, caractérisé en ce que, dans le cas d'utilisation d'un embout rotatif femelle (4'), l'étanchéité du raccordement avec une partie mâle d'un appareil ou d'un raccord est assurée, au niveau de l'épaulement intérieur (12), au moyen d'un joint à écrasement (14).

6. Ensemble, suivant l'une quelconque des revendications 2 et 3, caractérisé en ce que, dans le cas d'utilisation d'un embout rotatif mâle (4"), l'étanchéité est assurée, d'une part, entre les moyens de blocage et de sertissage (3, 4) par l'intermédiaire d'un joint torique (15) logé dans une gorge (16) prévue sous la partie (7) du moyen de blocage (3) et s'appuyant contre la paroi du trou lisse (13) et, d'autre part, soit au moyen d'un joint à écrasement (14) serré dans un organe femelle avec épaulement par la partie (7) formant appui lors du serrage du raccord, soit par prévision d'une bande d'étanchéité entre les filets de l'organe mâle et d'un organe femelle ne présentant pas d'épaulement.

7. Ensemble, suivant l'une quelconque des revendications 3 et 4, caractérisé en ce que le moyen de maintien (1) est avantageusement pourvu, près de son dispositif de manoeuvre (17), à une distance du filetage (10) légèrement inférieure à la longueur du taraudage (9) du manchon (8) du moyen de sertissage (4), d'un repère circulaire (19).

8. Procédé de montage d'un ensemble suivant l'une quelconque des revendications 1 à 7, caractérisé en ce qu'il consiste à enfiler le moyen (1) de maintien de l'extrémité d'un tube (2) sur ledit tube, à solidariser ce moyen (1) avec ladite extrémité par vissage du taraudage (5) jusqu'à affleurement de l'extrémité du tube (2) avec celle dudit moyen (1), à monter sur l'extrémité du moyen (4) de sertissage et de raccordement le moyen de blocage (3), à immobiliser ce dernier en position, à emboîter ledit moyen de sertissage et de raccordement (4), ensemble avec le moyen de blocage (3), sur l'extrémité de l'ensemble moyen de maintien (1) et tube (2), puis à engager à force le moyen de blocage (3) dans l'extrémité de l'ensemble formé par le moyen de maintien (1) et par l'extrémité du tube (2), par pénétration forcée du moyen de maintien (1) avec le tube (2) dans le moyen de sertissage et de raccordement (4).

## Patentansprüche

1. Anordnung mit einem Anschlußstück und einem Rohr bzw. Schlauch aus Kunststoffmaterial, bestehend aus einer Einrichtung (1) zum Halten des Rohr- bzw. Schlauchendes (2), die über eine Blockiereinrichtung (3) mit einer Einrichtung (4) zum Aufquetschen auf das Ende und zum Anschließen an ein Gerät oder ein anderes Anschlußstück zusammenwirkt, wobei die Blockiereinrichtung (3) in das Rohrende (2) eindringt und gegen die Einrichtung (4) zum Aufquetschen und zum Anschließen drückt, dadurch gekennzeichnet, daß die Einrichtung (1) zum Halten des Rohrendes (2) in Form eines Rings gebildet ist, welcher das Rohrende (2) umgibt und eine Bohrung mit gleichem oder geringfügig größerem Durchmesser als dem maximalen äußeren Durchmesser des Rohrs (2) aufweist und an seinem mit dem Ende zusammenwirkenden Abschnitt mit einem auf diesen Abschnitt schraubbaren Innengewinde (5) versehen ist.

2. Anordnung nach Anspruch 1, dadurch gekennzeichnet, daß die Blockiereinrichtung (3) durch einen geriffelten Ring gebildet ist, mit einem mit Riffelungen (6) versehenen Abschnitt, deren Außendurchmesser größer als der Innendurchmesser des Rohrs (2) ist und die in das Rohr (2) eindringen und mit dessem Inneren zusammenwirken können, sowie einen Abschnitt (7) zum Drücken gegen die Einrichtung (4) zum Aufquetschen und Anschließen, wobei dieser Abschnitt (7) die Form einer Schulter hat.

3. Anordnung nach einem der Ansprüche 1 und 2, dadurch gekennzeichnet, daß die Einrichtung (4) zum Aufquetschen und Anschließen an einem Gerät oder einem anderen Anschlußstück in Form eines Drehansatzes in Buchsenform bzw. mit Innengewinde (4') oder in Steckerform bzw. mit Außengewinde (4") ausgebildet ist, der mit einem Betätigungspolygon (18) versehen ist und einerseits an seinem Ende, das mit der Einrichtung (1) zum Halten zusammenwirkt, einen hüllenförmigen Abschnitt (8) aufweist, der ein Innengewinde (9) hat, das mit einem Außengewinde (10) des Endes der auf das Rohr (2) geschraubten Halteeinrichtung (1) zusammenwirken kann, wobei das Innengevinde (9) am Boden der Hülle in einer Einschließung (11) ausläuft, deren Länge größer als diejenige des Außengewindes (10) der Halteeinrichtung (1) ist, sowie andererseits an seinem gegenüberliegenden Ende entweder eine Innenschulter (12) zum Abstützen der den Abschnitt (7) der Blockiereinrichtung (3) bildenden Schulter oder aber ein glattes Durchgangsloch (13) für die Blockiereinrichtung (3), deren Abschnitt (7) gegen das gegenüberliegende Ende drückt, aufweist.

4. Anordnung nach einem der Ansprüche 1 und 3, dadurch gekennzeichnet, daß auf der dem Außengewinde (10) gegenüberliegenden Seite die Halteeinrichtung (1) bei einem Abstand von dem Außengewinde (10), der größer als die Länge des Innengewindes (9) der Hülle (8) der Aufquetscheinrichtung (4) ist, mit einer Betätigungsvorrichtung (17), wie z.B. Abflachungen oder einem Betätigungspolygon, versehen ist, wobei diese Vorrichtung (17) auf der dem Außengewinde (10) zugewandten Seite durch einen Anschlag (17') begrenzt ist.

5. Anordnung nach Anspruch 3, dadurch gekennzeichnet, daß im Falle der Verwendung eines Drehansatzes in Buchsenform (4') die Dichtheit des Anschlusses an einen Abschnitt in Steckerform eines Geräts oder eines Anschlußstücks mittels einer Quetschdichtung (14) bei der Innenschulter (12) gewährleistet wird.

6. Anordnung nach einem der Ansprüche 2 und 3, dadurch gekennzeichnet, daß im Falle der Verwendung eines Drehansatzes in Steckerform (4") die Dichtheit einerseits zwischen den Blockier- und Aufquetscheinrichtungen (3, 4) über einen O-Ring (15), der in einer Nut (16, 17) sitzt, die unter dem Abschnitt (7) der Blockiereinrichtung vorgesehen ist, und der gegen die Wand des glatten Lochs (13) drückt, sowie andererseits entweder mittels einer Quetschdichtung (14), die in ein buchsenförmiges Element mit Schulter durch den Stützabschnitt (7) beim Festschrauben des Anschlußstücks geklemmt wird, oder aber durch Verwendung eines Dichtungsbandes zwischen Gewinden des steckerförmigen Elements und einem buchsenförmigen Element ohne Schulter gewährleistet wird.

7. Anordnung nach einem der Ansprüche 3 und 4, dadurch gekennzeichnet, daß die Halteeinrichtung (1) vorteilhafterweise in der Nähe ihrer Betätigungsvorrichtung (17) bei einem Abstand des Außengewindes (10), der geringfügig kleiner als die Länge des Innengewebes (9) der Hülle (8) der Aufquetscheinrichtung (4) ist, mit einer kreisförmigen Markierung (19) versehen ist.

8. Verfahren zum Montieren einer Anordnung nach einem der Ansprüche 1 bis 7, dadurch gekennzeichnet, daß es die folgenden Schritte aufweist:
- Überstülpen der Einrichtung (1) zum Halten des Rohr - bzw. Schlauchendes (2) auf das Rohr bzw. den Schlauch,
- Verbinden der Einrichtung (1) mit dem Ende durch Schrauben des Innengewindes (5) bis zur Bündigkeit des Endes des Rohrs (2) mit demjenigen der Einrichtung (1),
- Befestigen der Blockiereinrichtung (3) an dem Ende der Aufquetsch- und Anschlußeinrichtung (4),
- Festlegen der Blockiereinrichtung (3) in ihrer Position,
- Aufeinanderstecken der Aufquetsch- und Anschlußeinrichtung (4) zusammen mit der Blockiereinrichtung (3) auf das Ende der durch die Halteeinrichtung (1) und das Rohrende (2) gebildeten Einheit, und
- unter Kraftaufwand die Blockiereinrichtung (3) in dem Ende der durch die Halteeinrichtung (1) und das Rohr (2) gebildeten Einheit in Eingriff bringen, indem man die Halteeinrichtung (1) mit dem Rohr (2) in die Aufquetsch- und Anschlußeinrichtung (4) hineinzwingt.

## Claims

1. Unit comprising a coupling and a tube made of synthetic material, consisting of a means (1) for holding the end of the tube (2) cooperating, via a blocking means (3), with a means (4) for crimping said end and for coupling to an apparatus or another coupling, said blocking means (3) penetrating into the end of the tube (2) and resting on the crimping and coupling means (4), characterized in that the means (1) for holding the end of the tube (2) is made up in the form of a ring surrounding said end of the tube (2), having a bore with a diameter equal to or slightly greater than the maximum external diameter of said tube (2) and provided atits portion cooperating with said end with a female thread (5) which screws thereon.

2. Unit according to claim 1, characterized in that the blocking means (3) consists of a grooved bushing having a portion equipped with grooves (6) with an external diameter greater than the internal diameter of the tube (2) intended to penetrate into said tube (2) and to cooperate with the interior thereof and a portion (7) for resting on the crimping and coupling means (4), this portion (7) being in the form of a shoulder.

3. Unit according to any one of claims 1 and 2, characterized in that the means (4) for crimping and coupling to an apparatus or to another coupling is made up in the form of a female (4') or male (4") rotating connector provided with a manoeuvring polygon (18) and equipped, on the one hand, at its end cooperating with the holding means (1) with a sleeve-shaped portion (8) having a female thread (9) intended to cooperate with a thread (10) on the end of the holding means (1) screwed onto the tube (2), said female thread (9) ending at the bottom of the sleeve with a recess (11) having a length greater than the thread (10) of the holding means (1) and, on the other hand, at its opposing end either with an internal shoulder (12) for supporting the shoulder forming the portion (7) of the blocking means (3) or with a smooth hole (13) for the passage of the blocking means (3) of which the portion (7) rests on said opposing end.

4. Unit according to any one of claims 1 to 3, characterized in that, on the side remote from the thread (10), the holding means (1) is provided, at a distance from the thread (10) greater than the length of the female thread (9) of the sleeve (8) of the crimping means (4), with a manoeuvring device (17) such as flattened regions or a manoeuvring polygon, this device (17) being limited, on the side facing the thread (10), by a stop (17').

5. Unit according to claim 3, characterized in that, when a female rotating connector (4') is used, the tightness of the coupling to a male portion of an apparatus or of a coupling is ensured, in the region of the internal shoulder (12), by means of a compression joint (14).

6. Unit according to any one of claims 2 and 3, characterized in that, when a male rotating connector (4") is used, the tightness is ensured, on the one hand, between the blocking and crimping means (3, 4) via an O-ring (15) housed in a furrow (16) provided beneath the portion (7) of the blocking means (3) and resting against the wall of the smooth hole (13) and, on the other hand, either via a compression joint (14) gripped in a female member with a shoulder by the portion (7) forming a support during the gripping of the coupling or by the provision of a sealing strip between the threads of the male member and of a female member not having a shoulder.

7. Unit according to any one of claims 3 and 4, characterized in that the holding means (1) is advantageously provided, close to its manoeuvring device (17) at a distance from the thread (10) slightly smaller than the length of the female thread (9) of the sleeve (8) of the crimping means (4), with a circular marker (19).

8. Method of assembling a unit according to any one of claims 1 to 7, characterized in that it involves slipping the means (1) for holding the end of a tube (2) onto said tube, connecting this means (1) to said end by screwing the female thread (5) until the end of the tube (2) is flush with that of said means (1), mounting the blocking means (3) on the end of the crimping and coupling means (4), immobilizing the blocking means (3) in position, fitting said crimping and coupling means (4) together with the blocking means (3) on the end of holding means (1) and tube (2) unit, then force-fitting the blocking means (3) in the end of the unit formed by the holding means (1) and by the end of the tube (2) by forced penetration of the holding means (1) with the tube (2) into the crimping and coupling means (4).
